# EUROPEAN PATENT APPLICATION

(11) **EP 4 787 465 A1**
(43) Date of publication of application: **05.08.2026**
(21) Application number: 23953896.0
(22) Date of filing: 25.10.2023
(51) Int. Cl.: H01M 4/36, H01M 4/58, H01M 4/04, H01M 4/136, H01M 10/0525, H01M 4/62

(54) **POSITIVE ELECTRODE MATERIAL OF BATTERY AND PREPARATION METHOD THEREFOR, POSITIVE ELECTRODE SHEET, AND LITHIUM-ION BATTERY**

(30) Priority: 27.09.2023 CN 202311279134
(71) Applicant: Shenzhen Dynanonic Co., Ltd., Shenzhen, Guangdong 518000 (CN); Foshan Dynanonic Technology Co., Ltd., Foshan, Guangdong 528500 (CN)
(72) Inventor: XU, Rongyi, Shenzhen, Guangdong 518000 (CN); XU, Zhanyu, Shenzhen, Guangdong 518000 (CN); KONG, Lingyong, Shenzhen, Guangdong 518000 (CN); LI, Yineng, Shenzhen, Guangdong 518000 (CN); CHEN, Yanyu, Shenzhen, Guangdong 518000 (CN)
(74) Representative: Petraz, Gilberto Luigi
(86) International application number: PCT/CN2023/126486
(87) International publication number: WO 2025/065760

(57) **Abstract**

A battery cathode material, a preparation method thereof, a cathode plate, and a lithium-ion battery are provided. The battery cathode material includes a phosphate-based active material core and a coating layer covering the phosphate-based active material core. The coating layer includes a heteroatom-doped carbon material, a heteroatom includes at least one element from Group IIIA elements, and a heteroatom content in the heteroatom-doped carbon material is 1 wt% to 5 wt%.

## Description

### CROSS-REFERENCE TO RELATED APPLICATIONS

This application claims priority to Chinese patent application No. 202311279134.7, filed on September 27, 2023, and entitled "Battery Cathode Material, Preparation Method thereof, Cathode plate, and Lithium-ion Battery," the entire contents of which are incorporated herein by reference.

### TECHNICAL FIELD

The present application relates to the field of lithium-ion battery technology, and specifically to a battery cathode material, a preparation method thereof, a cathode plate, and a lithium-ion battery.

### BACKGROUND

Phosphate-based cathode materials feature an olivine structure and offer advantages such as abundant raw materials, low cost, and high specific capacity. These merits make them one of the primary cathode materials for power lithium-ion batteries.

Phosphate-based cathode materials include lithium iron phosphate, lithium manganese phosphate, lithium manganese iron phosphate, and the like. Among them, lithium iron phosphate, as a representative polyanionic cathode material, offers excellent performance and safety, making it a highly promising cathode material for lithium-ion batteries. However, the low electrical conductivity of phosphate-based cathode materials limits their rate performance and other characteristics in lithium-ion batteries, thus restricting their application in high-power battery fields.

### SUMMARY

To address the problems existing in related technologies, embodiments of the present application provides a battery cathode material, a preparation method thereof, a cathode plate, and a lithium-ion battery, aiming to improve the electrical conductivity of the cathode material and thus enhance a rate performance thereof when applied to lithium-ion batteries.

In a first aspect, embodiments of the present application provides a battery cathode material, comprising: a phosphate-based active material core, and a coating layer covering the phosphate-based active material core. The coating layer comprises a heteroatom-doped carbon material, a heteroatom comprises at least one element from Group IIIA elements, and a heteroatom content in the heteroatom-doped carbon material is 1 wt% to 5 wt%.

The battery cathode material provided in embodiments of the present application uses heteroatom doping of carbon materials to obtain the heteroatom-doped carbon material, which is then used as a coating layer for the phosphate-based active material. The heteroatom comprise at least one element selected from Group IIIA elements. Group IIIA elements mainly form ions with a valence of +3. When used to dope carbon, the Group IIIA elements alter the band structure of the carbon material, thereby improving the electrically conductive property of the carbon coating layer. During the doping process, the heteroatoms substitute for carbon atoms at some specific lattice sites and form covalent bonds with adjacent carbon atoms, generating hole carriers in the carbon material lattice. This increases the concentration of hole carriers in the carbon material, thus improving the electrically conductive property. When such a heteroatom-doped carbon material is used as the coating layer material for the phosphate-based active material, the electrically conductive property of the cathode material can be further improved, which in turn can enhance its rate performance when used in secondary batteries.

In some embodiments of the present application, the heteroatom comprise one or more of B, Al, and Ga.

In some embodiments of the present application, a thickness of the coating layer is 2 nm to 5 nm.

In some embodiments of the present application, a mass ratio of a graphitized carbon to an amorphous carbon in the heteroatom-doped carbon material is (0.6 to 2) : 1.

In some embodiments of the present application, the phosphate-based active material core comprises an active material having a chemical formula LiₓM_{y}N_{z}PO₄, in which, M is at least one element selected from the group consisting of Fe, Mn, Co, and Ni; N is at least one element selected from the group consisting of V, Al, Ti, Ni, Nb, Mg, and Zr; 0.9 ≤ x ≤ 1.1; 0.9 ≤ y ≤ 1; and 0.001 ≤ z ≤ 0.08.

In some embodiments of the present application, a carbon content of the battery cathode material is 0.5 wt% to 2 wt%.

In some embodiments of the present application, an average particle size Dv50 of the battery cathode material is 0.5 µm to 1.5 µm.

In some embodiments of the present application, a specific surface area of the battery cathode material is 8 m²/g to 30 m²/g.

In a second aspect, embodiments of the present application provide a method for preparing a battery cathode material, comprising:
providing a phosphate-based active material and a heteroatom-doped carbon material;
mixing the heteroatom-doped carbon material and the phosphate-based active material and subjecting a resulting mixture to ball milling whereby obtaining a cathode material precursor; and
sintering the cathode material precursor under an inert atmosphere whereby obtaining the battery cathode material.

In some embodiments of the present application, a mass percentage of the heteroatom-doped carbon material relative to the phosphate-based active material is 0.5% to 2%.

In some embodiments of the present application, the step of providing the heteroatom-doped carbon material comprises: providing a carbon source and a heteroatom source and subjecting the carbon source and the heteroatom source to calcination treatment, whereby obtaining the heteroatom-doped carbon material.

In some embodiments of the present application, the heteroatom source comprises one or more compounds containing Group IIIA elements.

In some embodiments of the present application, the carbon source comprises one or more of glucose, sucrose, and a starch.

In some embodiments of the present application, a mass percentage of the heteroatom source relative to the carbon source is 1% to 5%.

In some embodiments of the present application, the step of providing the phosphate-based active material comprises: providing a lithium source, a phosphorus source, an M source, and an N source for reaction, and separating a solid after the reaction to obtain the phosphate-based active material.

In some embodiments of the present application, the N source comprises one or more of a vanadium-containing compound, an aluminum-containing compound, a titanium-containing compound, a nickel-containing compound, a niobium-containing compound, a magnesium-containing compound, and a zirconium-containing compound.

In some embodiments of the present application, the lithium source comprises one or more of lithium hydroxide, lithium oxide, lithium oxalate, lithium phosphate, lithium carbonate, lithium dihydrogen phosphate, and dilithium hydrogen phosphate.

In some embodiments of the present application, the phosphorus source comprises one or more of phosphoric acid, ammonium phosphate, diammonium hydrogen phosphate, ammonium dihydrogen phosphate, lithium phosphate, lithium dihydrogen phosphate, dilithium hydrogen phosphate, and iron phosphate.

In some embodiments of the present application, the M source comprises one or more of a Fe source, a Mn source, a Co source, and a Ni source.

A molar ratio of the lithium source, the M source, the N source, and the phosphorus source satisfies Li : M : N : P = (0.9 to 1.1) : (0.9 to 1) : (0.001 to 0.08) : 1.

In some embodiments of the present application, the step of sintering the cathode material precursor under the inert atmosphere comprises: reacting at a temperature of 100°C to 200°C for 0.5 hr to 1 hr, increasing the temperature to 300°C to 400°C and reacting for 1 hr to 2 hrs, and further increasing the temperature to 600°C to 800°C and reacting for 4 hrs to 8 hrs, in which, a heating rate in each stage is 2°C/min to 5°C/min.

In a third aspect, embodiments of the present application provide a cathode plate, which comprises the battery cathode material according to the embodiments of the first aspect of the present application or the battery cathode material prepared by the preparation method according to the embodiments of the second aspect of the present application.

Fourthly, embodiments of the present application provides a lithium-ion battery, which comprises a cathode plate according to embodiments of the third aspect of the present application.

### BRIEF DESCRIPTION OF DRAWINGS

To more clearly illustrate the technical solutions in the embodiments of the present application, the following briefly introduces the accompanying drawings required for describing the embodiments. It should be understood that the drawings in the following description show only some embodiments of the present application. For those of ordinary skill in the art, other drawings may be derived from these drawings without creative effort.
FIG. 1 shows an SEM image of the battery cathode material prepared in Example 5 of the present application;
FIG. 2 shows an X-ray diffraction (XRD) pattern of the battery cathode material prepared in Example 5 of the present application;
FIG. 3 shows a TEM image of a coating layer on the battery cathode material prepared in Example 5 of the present application; and
FIG. 4 shows a charge-discharge curve of a button cell employing the battery cathode material prepared in Example 5 of the present application.

### DETAILED DESCRIPTION OF EMBODIMENTS

Features and exemplary embodiments of various aspects of the present application will be described in detail below. Numerous specific details are set forth in the following detailed description to provide a thorough understanding of the present application. However, it will be apparent to those skilled in the art that the present application may be practiced without some of these specific details. The description of the embodiments below is intended to provide a better understanding of the present application by presenting examples thereof. In the accompanying drawings and the following description, some well-known structures and techniques may not be shown or described to avoid unnecessarily obscuring the present application. For clarity, dimensions of certain structures may be exaggerated. Moreover, the features, structures, or characteristics described herein may be combined in any suitable manner in one or more embodiments.

It is to be noted that relational terms such as "first" and "second" are used herein solely to distinguish one entity or operation from another, without necessarily requiring or implying any actual relationship or order between such entities or operations. In the description of the present application, unless otherwise specified, the term "multiple" means two or more. Furthermore, terms such as "comprise," "include," or any variant thereof are intended to cover non-exclusive inclusion, such that a process, method, article, or apparatus comprising a list of elements includes not only those elements but may also include other elements not expressly listed or inherent to such process, method, article, or apparatus. Without further limitation, an element defined by the phrase "comprising..." does not preclude the existence of additional identical elements in the process, method, article, or apparatus that comprises said element.

To address related technical problems, the present application example provides a battery cathode material, a preparation method thereof, a cathode plate, and a lithium-ion battery, aiming to improve the electrically conductive property of the battery cathode material and thus enhance a rate performance thereof when used in secondary batteries.

### Battery cathode material

Embodiments of a first aspect of the present application provide a battery cathode material, comprising: a phosphate-based active material core, and a coating layer covering the phosphate-based active material core. The coating layer comprises a heteroatom-doped carbon material, a heteroatom comprises at least one element from Group IIIA elements, and a heteroatom content in the heteroatom-doped carbon material is 1 wt% to 5 wt%.

In the context of the present application, Group IIIA elements comprises boron, aluminum, gallium, indium, and thallium, whose atoms have three valence electrons. According to embodiments of the present application, during the doping process of the carbon material, heteroatoms with three valence electrons replace positions of some carbon atoms. When the three valence electrons of the heteroatom form covalent bonds with adjacent carbon atoms, the lack of electrons creates holes in the crystal structure of the carbon material, increasing the concentration of hole carriers in the carbon material and thus improving its electrically conductive property. When the heteroatom-doped carbon material is used as a coating layer for the battery cathode material, the electrically conductive property of the cathode material can be improved, thereby enhancing the rate performance of the battery cathode material when used in lithium-ion batteries.

According to the embodiments of the present application, a heteroatom content in the heteroatom-doped carbon material is limited to 1 wt% to 5 wt%. When the heteroatom content is lower than this range, there are fewer heteroatoms doped into the carbon layer structure, resulting in a lower concentration of hole carriers and an insignificant improvement in electrically conductive property. When the heteroatom content is higher than this range, the doping amount of heteroatoms is too high, which easily leads to the formation of secondary phases. On the one hand, the formation of the secondary phases may reduce the proportion of active material, and on the other hand, since the formed secondary phases are heteroatom compounds, the overall electrically conductive property decreases, thus affecting the electrically conductive property of the carbon layer.

In some embodiments, the heteroatom comprise one or more of B, Al, and Ga.

In some embodiments, a thickness of the coating layer is 2 nm to 5 nm.

In some embodiments, a mass ratio of a graphitized carbon to an amorphous carbon in the heteroatom-doped carbon material is (0.6 to 2) : 1.

According to the embodiments of the present application, by adjusting the preparation process of the heteroatom-doped carbon material, the mass ratio of the graphitized carbon to the amorphous carbon in the heteroatom-doped carbon material is controlled within the above range. The graphitized carbon has the characteristics of good electrically conductive property, strong high-temperature stability, and few side reactions, while the amorphous carbon has the characteristics of good coating effect, numerous pores, good wettability, and is conducive to lithium ion transport. By controlling the mass ratio of the graphitized carbon to the amorphous carbon within the above range, the carbon layer coating effect can be further improved, and the balance between electron transport and ion diffusion can be adjusted, thereby reducing product polarization and improving electrochemical performance.

In some embodiments, the phosphate-based active material core comprises an active material having a chemical formula LiₓM_{y}N_{z}PO₄, where M is at least one element selected from the group consisting of Fe, Mn, Co, and Ni; N is at least one element selected from the group consisting of V, Al, Ti, Ni, Nb, Mg, and Zr; 0.9 ≤ x ≤ 1.1; 0.9 ≤ y ≤ 1; and 0.001 ≤ z ≤ 0.08.

According to embodiments of the present application, by doping the active material with one or more elements from V, Al, Ti, Ni, Nb, Mg, and Zr, the crystal lattice structure of the cathode material is altered through bulk metal doping. This can broaden the lithium ion transport channels, improve the continuity and stability of the lithium ion transport channels, and reduce the diffusion energy barrier of lithium ions in the lattice, thereby accelerating the lithium ion transport speed and improving the electrically conductive property of the cathode material. Furthermore, bulk doping can introduce new elements into the crystal structure of the cathode material. These doped elements can further stabilize the crystal structure of the cathode material, reduce structural changes in the cathode material during lithium ion intercalation/deintercalation, thereby improving the electrical conductivity and cycle stability of the cathode material.

In some embodiments, a carbon content of the cathode material is 0.5 wt% to 2 wt%.

According to the embodiments of the present application, incorporating carbon can improve the electrically conductive property of the cathode material and increase the battery capacity. Both excessively high and low carbon content will affect the performance of the cathode material. Specifically, when the carbon content of the cathode material is less than 0.5%, the electrically conductive property of the cathode material is poor, and the internal resistance of the battery increases; and when the carbon content of the cathode material exceeds 2%, the proportion of active material in the cathode material decreases, leading to a decrease in the specific capacity of the cathode material and thus a decrease in the energy density of the battery. The carbon content of the cathode material can be selected to be 1% to 2%.

In some embodiments, an average particle size Dv50 of the battery cathode material is 0.5 µm to 1.5 µm.

The average particle size Dv50 has a meaning well-known in the art, representing the particle size at which a cumulative volume distribution percentage of the material reaches 50%. It can be measured using methods and instruments well-known in the art, for example, using a laser diffraction analyzer according to GB/T 19077-2016 "Particle size analysis - Laser diffraction method".

In some embodiments, a specific surface area of the battery cathode material is 8 m²/g to 30 m²/g.

The specific surface area can be measured using methods and instruments well-known in the art, for example, by using the methods and instruments specified in GB/T 19587-2017 "Determination of Specific Surface Area of Solid Materials by Gas Adsorption BET Method".

### Method for preparing battery cathode material

Embodiments of a second aspect of the present application provide a method for preparing a battery cathode material, comprising the following steps S10 to S30:
S10, providing a phosphate-based active material and a heteroatom-doped carbon material;
S20, mixing the heteroatom-doped carbon material and the phosphate-based active material and subjecting a resulting mixture to ball milling whereby obtaining a cathode material precursor;
S30, sintering the cathode material precursor under an inert atmosphere whereby obtaining the battery cathode material.

In some embodiments, a mass percentage of the heteroatom-doped carbon material relative to the phosphate-based active material is 0.5% to 2%.

According to embodiments of the present application, by controlling the ratio of the heteroatom-doped carbon material to the phosphate-based active material within the above range, the resulting cathode material can have good electrically conductive property and facilitate the diffusion of lithium ions. A too low proportion of heteroatom-doped carbon material will lead to poor electrically conductive property of the cathode material and incomplete coating, easily causing side reactions; while a too high proportion of heteroatom-doped carbon material will result in an excessively thick coating layer, hindering lithium ion diffusion, and reducing the proportion of active material, thus lowering the capacity of the cathode material.

According to embodiments of the present application, the preparation method provided in embodiments of the second aspect of the present application can be used to prepare the battery cathode material according to embodiments of the first aspect of the present application.

In some embodiments, the step of providing the heteroatom-doped carbon material comprises: providing a carbon source and a heteroatom source and subjecting the carbon source and the heteroatom source to calcination treatment, whereby obtaining the heteroatom-doped carbon material.

According to embodiments of the present application, the heteroatom source and carbon source are mixed and then subjected to calcination treatment, so that the heteroatoms are doped into the carbon material structure.

In some embodiments, the step of providing the heteroatom-doped carbon material comprises: grinding the carbon source and the heteroatom source, followed by calcination treatment to obtain the heteroatom-doped carbon material.

According to embodiments of the present application, sufficient grinding before calcination can reduce the particle size of the carbon source and heteroatom source, allowing for better doping of heteroatoms during the calcination process, resulting in a more structurally stable heteroatom-doped carbon material.

In some embodiments, the calcination temperature is 600°C to 1000°C, optionally 800°C to 1000°C.

In some embodiments, the calcination treatment time is 4 hrs to 10 hrs, optionally 6 hrs to 10 hrs, and further optionally 8 hrs to 10 hrs.

In some embodiments, the heteroatom source comprises one or more compounds containing Group IIIA elements.

In some embodiments, the heteroatom source may be one or more of a boron-containing compound, an aluminum-containing compound, a gallium-containing compound, an indium-containing compound, or a thallium-containing compound.

Optionally, the boron-containing compound may be one or more selected from the group consisting of boric acid, borate, boron oxide, ammonium borate, and aluminum borate.

The aluminum-containing compound may be one or more selected from the group consisting of aluminum hydroxide, aluminum acetate, aluminum tribromide, aluminum phosphate, or aluminum dihydrogen phosphate.

The gallium-containing compound may be one or more selected from the group consisting of gallium hydroxide, gallium oxide, gallium nitrate, gallium chloride, and gallium nitride.

The indium-containing compound may be one or more selected from the group consisting of indium hydroxide, indium oxide, indium nitrate, indium chloride, and indium phosphide.

The thallium-containing compound may be one or more selected from the group consisting of thallium hydroxide, thallium oxide, thallium nitrate, thallium chloride, and thallium phosphide.

In some embodiments, the carbon source comprises one or more of glucose, sucrose, and a starch.

In some embodiments, the step of providing the phosphate-based active material comprises: providing a lithium source, a phosphorus source, an M source, and an N source for reaction, and separating a solid after the reaction to obtain the phosphate-based active material.

In some embodiments, the step of providing the phosphate-based active material comprises: reacting the lithium source with the phosphorus source, adding the M source and the N source for a hydrothermal reaction. After the reaction, the solid is separated, washed, and dried to obtain the active material core.

In some embodiments, the temperature of the hydrothermal reaction is 160°C to 200°C, for example, such temperature may be 170°C, 180°C, 190°C, or within a range formed by any two of the above values.

In some embodiments, the hydrothermal reaction time is 6 hrs to 12 hrs, for example, 8 hrs, 9 hrs, 10 hrs, or 11 hrs.

In some embodiments, the N source comprises one or more of a vanadium-containing compound, an aluminum-containing compound, a titanium-containing compound, a nickel-containing compound, a niobium-containing compound, a magnesium-containing compound, and a zirconium-containing compound.

Optionally, the vanadium-containing compound comprises one or more of ammonium metavanadate, vanadium pentoxide, or vanadyl oxalate.

Optionally, the aluminum-containing compound comprises one or more of aluminum nitrate, aluminum acetate, and aluminum sulfate.

Optionally, the titanium-containing compound comprises one or more of tetraethyl titanate, butyl titanate, and ammonium hexafluorotitanate.

Optionally, the nickel-containing compound comprises one or more of nickel acetate, nickel benzoate, and nickel citrate.

Optionally, the niobium-containing compound comprises one or more of niobium sulfate, niobium oxalate, and niobium nitrate.

Optionally, the magnesium-containing compound comprises one or more of magnesium bicarbonate, magnesium nitrate, and magnesium sulfate.

Optionally, the zirconium-containing compound comprises one or more of zirconium acetate, zirconium citrate, and zirconium nitrate.

In some embodiments of the present application, the lithium source comprises one or more of lithium hydroxide, lithium oxide, lithium oxalate, lithium phosphate, lithium carbonate, lithium dihydrogen phosphate, and dilithium hydrogen phosphate.

In some embodiments of the present application, the phosphorus source comprises one or more of phosphoric acid, ammonium phosphate, diammonium hydrogen phosphate, ammonium dihydrogen phosphate, lithium phosphate, lithium dihydrogen phosphate, dilithium hydrogen phosphate, and iron phosphate.

In some embodiments, the M source comprises one or more of a Fe source, a Mn source, a Co source, and a Ni source.

Optionally, the Fe source comprises one or more of ferrous sulfate, ferrous phosphate, ferrous oxalate, and ferrous pyrophosphate.

Optionally, the Mn source comprises one or more of manganese sulfate, manganese nitrate, manganese carbonate, manganese oxalate, manganese acetate, and manganese chloride.

Optionally, the Co source comprises one or more of the following: cobalt sulfate, cobalt nitrate, cobalt carbonate, cobalt acetate, and cobalt chloride.

Optionally, the Ni source comprises one or more of nickel carbonate, nickel sulfate, and nickel nitrate.

In some embodiments, a molar ratio of the lithium source, the M source, the N source, and the phosphorus source satisfies Li : M : N : P = (0.9 to 1.1) : (0.9 to 1) : (0.001 to 0.08) : 1.

According to the embodiments of the present application, controlling the molar ratio of the lithium source, the M source, the N source, and the phosphorus source within the above range is beneficial for preparing a cathode active material containing the lithium element, the phosphorus element, the M element, and the N element in an appropriate proportion, resulting in a battery cathode material with good conductivity and, consequently, high cycle performance and rate performance.

In some embodiments, a mass percentage of the heteroatom source relative to the carbon source is 1% to 5%.

According to the embodiments of the present application, by controlling the mass percentage of the heteroatom source relative to the carbon source within the above range, effective doping of the carbon material with heteroatoms can be achieved, thereby improving the electrically conductive property of the carbon material while avoiding the formation of secondary phases and preventing damage to the carbon material structure.

In some embodiments, the ball milling process is carried out at a ball mill rotation speed of 300 rpm to 500 rpm.

In some embodiments, the ball milling time is 4 hrs to 8 hrs.

In some embodiments, after ball milling, the material is dried at a temperature of 80°C to 100°C for 4 hrs to 6 hrs.

In some embodiments, the step of sintering the cathode material precursor under the inert atmosphere comprises: reacting at a temperature of 100°C to 200°C for 0.5 hr to 1 hr, increasing the temperature to 300°C to 400°C and reacting for 1 hr to 2 hrs, and further increasing the temperature to 600°C to 800°C and reacting for 4 hrs to 8 hrs. A heating rate in each stage is 2°C/min to 5°C/min.

According to the embodiments of the present application, the cathode material precursor is sintered in three stages. The first stage involves sintering at 100°C to 200°C to remove the crystal water from the cathode material precursor; the second stage involves sintering at 300°C to 400°C to remove the remaining volatile components; and the final stage involves sintering at 600°C to 800°C to improve the graphitization degree of the carbon layer and remove residual organic functional groups, while promoting crystal growth and improving the crystallinity of the particles. By adjusting the sintering temperature and time, the ratio of graphitized carbon to amorphous carbon in the carbon layer can be effectively controlled within a suitable range, thereby enabling the coating layer to have a good coating effect while further improving the electrically conductive property of the cathode material.

### Cathode plate

Embodiments of a third aspect of the present application provide a cathode plate, which comprises the battery cathode material according to the embodiments of the first aspect of the present application or the battery cathode material prepared by the preparation method according to the embodiments of the second aspect of the present application.

In some embodiments, the cathode plate comprises a cathode current collector and a cathode material film layer, in which, the cathode material film layer comprises a cathode active material, a conductive agent, and a binder, and the cathode active material comprises the battery cathode material provided according to the above embodiments of the present application.

Examples of the current collector comprise one of an aluminum foil, a nickel mesh, or an aluminum-plastic composite film. Examples of the conductive agent comprises: acetylene black, carbon black, graphite, or a combination thereof. Examples of binders comprise polyvinylidene fluoride, sodium carboxymethyl cellulose, styrenebutadiene rubber latex, or a combination thereof.

### Lithium-ion battery

Embodiments of a fourth aspect of the present application provide a lithium-ion battery, which comprises a cathode plate according to embodiments of the third aspect of the present application.

In some embodiments, the lithium-ion battery comprises a cathode plate, an anode plate, a separator, and an electrolyte.

As those skilled in the art will understand, the anode plate, separator, and electrolyte can use corresponding materials conventionally used in lithium-ion batteries, and therefore will not be described in detail here.

### Examples

Specific examples are provided below to illustrate the present application. It should be noted that the following embodiments are exemplary and are intended solely for the purpose of explaining the present application, and are not to be construed as limiting the scope thereof. In the event that specific techniques or conditions are not indicated in the embodiments, they shall be performed according to techniques or conditions described in the literature in the art or according to the product specifications. All reagents or instruments used, for which the manufacturer is not specified, are conventional products commercially available.

### Example 1

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 55.6 g of ferrous sulfate heptahydrate and 0.5769 g of ammonium metavanadate were added to the Li₃PO₄ suspension. After stirring for 0.5 hrs, a resulting mixture was transferred into a hydrothermal reaction autoclave, where it underwent a hydrothermal reaction at 160°C for 12 hrs.

In step S30, after completion of the hydrothermal reaction, the mixture was cooled to room temperature. The precipitate was separated, washed sequentially with deionized water and ethanol, and then dried in an oven at 80°C to obtain a vanadium-doped active material core.

### Preparation of heteroatom-doped carbon material

In step S40, 1 g of anhydrous glucose and 0.0515 g of boron oxide were placed into an agate mortar and thoroughly ground. The ground mixture was then transferred into a tube furnace, where it was subjected to calcination under an argon atmosphere. The temperature was raised from room temperature to 600°C at a heating rate of 2°C/min, held at 600°C for 10 hrs, and then cooled to room temperature to obtain a boron-doped carbon material.

### Preparation of battery cathode material

In step S50, 0.2 g of the boron-doped carbon material and 10 g of the vanadium-doped active material core were mixed, and ethanol was added. A resulting mixture was then subjected to ball-milling at a rotation speed of 300 rpm for 8 hrs. A resulting mixture after ball-milling was transferred to an oven and dried at 80°C for 6 hrs to remove the ethanol, obtaining a carbon-containing precursor.

In step S60, the carbon-containing precursor was placed in a tube furnace and subjected to stepwise sintering under a nitrogen atmosphere. The sintering process involved heating from room temperature to 100°C at a heating rate of 2 °C/min and holding for 1 hr, followed by heating to 300°C at 2°C/min and holding for 2 hrs, and finally heating to 600°C at 2°C/min and holding for 8 hrs. After sintering, the material was allowed to cool naturally to room temperature, yielding the battery cathode material with the active material core having a chemical formula of LiFeV_{0.03}PO₄.

### Example 2

A battery cathode material was prepared by the following method:

### Preparation of active material core

In step S10, 25.176 g of lithium phosphate, 55.6 g of ferrous sulfate heptahydrate, and 1.0649 g of nickel acetate tetrahydrate were added to 150 mL of deionized water. 30 mL of ethylene glycol was introduced under magnetic stirring. After stirring for 0.5 hr, a resulting mixture was transferred into a hydrothermal reaction autoclave, where it underwent a hydrothermal reaction at 180°C for 9 hrs.

In step S20, after completion of the hydrothermal reaction, the mixture was cooled to room temperature. The precipitate was separated, washed sequentially with deionized water and ethanol, and then dried in an oven at 80°C to obtain a nickel-doped active material core.

### Preparation of heteroatom-doped carbon material

In step S30, 1 g of anhydrous glucose and 0.0515 g of boron oxide were placed into an agate mortar and thoroughly ground. The ground mixture was then transferred into a tube furnace, where it was subjected to calcination under an argon atmosphere. The temperature was raised from room temperature to 800°C at a heating rate of 3°C/min, held at 800°C for 7 hrs, and then cooled to room temperature to obtain a boron-doped carbon material.

### Preparation of battery cathode material

In step S40, 0.2 g of the boron-doped carbon material and 10 g of the nickel-doped active material core were mixed, and ethanol was added. A resulting mixture was then subjected to ball-milling at a rotation speed of 400 rpm for 6 hrs. A resulting mixture after ball-milling was transferred to an oven and dried at 80°C for 6 hrs to remove the ethanol, obtaining a carbon-containing precursor.

In step S50, the carbon-containing precursor was placed in a tube furnace and subjected to stepwise sintering under a nitrogen atmosphere. The sintering process involved heating from room temperature to 150°C at a heating rate of 3°C/min and holding for 1 hr, followed by heating to 350°C at 3°C/min and holding for 1.5 hrs, and finally heating to 700°C at 3°C/min and holding for 6 hrs. After sintering, the material was allowed to cool naturally to room temperature, yielding the battery cathode material with the active material core having a chemical formula of LiFeNi_{0.02}PO₄.

### Example 3

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 55.6 g of ferrous sulfate heptahydrate and 3.4927 g of aluminum nitrate nonahydrate were added to the Li₃PO₄ suspension. After stirring for 0.5 hrs, a resulting mixture was transferred into a hydrothermal reaction autoclave, where it underwent a hydrothermal reaction at 200°C for 6 hrs.

In step S30, after completion of the hydrothermal reaction, the mixture was cooled to room temperature. The precipitate was separated, washed sequentially with deionized water and ethanol, and then dried in an oven at 80°C to obtain an aluminum-doped active material core.

### Preparation of heteroatom-doped carbon material

In step S40, 1 g of anhydrous sucrose and 0.0515 g of boric acid were placed into an agate mortar and thoroughly ground. The ground mixture was then transferred into a tube furnace, where it was subjected to calcination under an argon atmosphere. The temperature was raised from room temperature to 1000°C at a heating rate of 5°C/min, held at 1000°C for 4 hrs, and then cooled to room temperature to obtain a boron-doped carbon material.

### Preparation of battery cathode material

In step S50, 0.2 g of the boron-doped carbon material and 10 g of the aluminum-doped active material core were mixed, and ethanol was added. A resulting mixture was then subjected to ball-milling at a rotation speed of 500 rpm for 4 hrs. A resulting mixture after ball-milling was transferred to an oven and dried at 80°C for 6 hrs to remove the ethanol, obtaining a carbon-containing precursor.

In step S60, the carbon-containing precursor was placed in a tube furnace and subjected to stepwise sintering under a nitrogen atmosphere. The sintering process involved heating from room temperature to 200°C at a heating rate of 5°C/min and holding for 0.5 hrs, followed by heating to 400°C at 5°C/min and holding for 2 hrs, and finally heating to 800°C at 5°C/min and holding for 4 hrs. After sintering, the material was allowed to cool naturally to room temperature, yielding the battery cathode material with the active material core having a chemical formula of LiFeAl0.04PO4.

### Example 4

A battery cathode material was prepared by the following method:

### Preparation of active material core

In step S10, 27.022 g of lithium hydroxide monohydrate was dissolved in 150 mL of deionized water. Subsequently, 90 mL of ethylene glycol was added under magnetic stirring, followed by the dropwise addition of 23.05 g of phosphoric acid, resulting in a Li₃PO₄ suspension.

In step S20, 22.24 g of ferrous sulfate heptahydrate, 18.12 g of manganese sulfate monohydrate, and 1.1971 g of tetraethyl titanate were added to the Li₃PO₄ suspension. After stirring for 0.5 hrs, the mixture was transferred into a hydrothermal reaction autoclave, where it underwent a hydrothermal reaction at 180°C for 8 hrs.

In step S30, after completion of the hydrothermal reaction, the mixture was cooled to room temperature. The precipitate was separated, washed sequentially with deionized water and ethanol, and then dried in an oven at 80°C to obtain a titanium -doped active material core.

### Preparation of heteroatom-doped carbon material

In step S40, 1 g of anhydrous starch and 0.0515 g of ammonium borate were placed into an agate mortar and thoroughly ground. The ground mixture was then transferred into a tube furnace, where it was subjected to calcination under an argon atmosphere. The temperature was raised from room temperature to 800°C at a heating rate of 4°C/min, held at 800°C for 8 hrs, and then cooled to room temperature to obtain a boron-doped carbon material.

### Preparation of battery cathode material

In step S50, 0.2 g of the boron-doped carbon material and 10 g of the titanium-doped active material core were mixed, and ethanol was added. A resulting mixture was then subjected to ball-milling at a rotation speed of 480 rpm for 4 hrs. A resulting mixture after ball-milling was transferred to an oven and dried at 80°C for 6 hrs to remove the ethanol, obtaining a carbon-containing precursor.

In step S60, the carbon-containing precursor was placed in a tube furnace and subjected to stepwise sintering under a nitrogen atmosphere. The sintering process involved heating from room temperature to 180°C at a heating rate of 5°C/min and holding for 1 hr, followed by heating to 400°C at 4°C/min and holding for 2 hrs, and finally heating to 800°C at 2°C/min and holding for 4 hrs. After sintering, the material was allowed to cool naturally to room temperature, yielding the battery cathode material with the active material core having a chemical formula of LiMn_{0.6}Fe_{0.4}Ti_{0.02}PO₄.

### Example 5

A battery cathode material was prepared by the following method:

### Preparation of active material core

In step S10, 28.952 g of lithium hydroxide monohydrate was dissolved in 150 mL of deionized water. Subsequently, 150 mL of ethylene glycol was added under magnetic stirring, followed by the dropwise addition of 23.05 g of phosphoric acid, resulting in a Li₃PO₄ suspension.

In step S20, 22.24 g of ferrous sulfate heptahydrate, 18.12 g of manganese sulfate monohydrate, and 0.5769 g of ammonium metavanadate were added to the Li₃PO₄ suspension. After stirring for 0.5 hrs, the resulting mixture was transferred into a hydrothermal reaction autoclave, where it underwent a hydrothermal reaction at 180°C for 8 hrs.

In step S30, after completion of the hydrothermal reaction, the mixture was cooled to room temperature. The precipitate was separated, washed sequentially with deionized water and ethanol, and then dried in an oven at 80°C to obtain a vanadium-doped active material core.

### Preparation of heteroatom-doped carbon material

In step S40, 1 g of anhydrous glucose and 0.04 g of gallium nitrate were placed into an agate mortar and thoroughly ground. The ground mixture was then transferred into a tube furnace, where it was subjected to calcination under an argon atmosphere. The temperature was raised from room temperature to 750°C at a heating rate of 2°C/min, held at 750°C for 6 hrs, and then cooled to room temperature to obtain a gallium-doped carbon material.

### Preparation of battery cathode material

In step S50, 0.2 g of the gallium-doped carbon material and 10 g of the vanadium-doped active material core were mixed, and ethanol was added. A resulting mixture was then subjected to ball-milling at a rotation speed of 480 rpm for 4 hrs. A resulting mixture after ball-milling was transferred to an oven and dried at 80°C for 6 hrs to remove the ethanol, obtaining a carbon-containing precursor.

In step S60, the carbon-containing precursor was placed in a tube furnace and subjected to stepwise sintering under a nitrogen atmosphere. The sintering process involved heating from room temperature to 180°C at a heating rate of 5°C/min and holding for 1 hr, followed by heating to 350°C at 2°C/min and holding for 2 hrs, and finally heating to 600°C at 2°C/min and holding for 4 hrs. After sintering, the material was allowed to cool naturally to room temperature, yielding the battery cathode material with the active material core having a chemical formula of LiMn_{0.6}Fe_{0.4}V_{0.03}PO₄.

### Example 6

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 22.24 g of ferrous sulfate heptahydrate, 18.12 g of manganese sulfate monohydrate, and 0.5769 g of ammonium metavanadate were added to the Li₃PO₄ suspension. After stirring for 0.5 hrs, the resulting mixture was transferred into a hydrothermal reaction autoclave, where it underwent a hydrothermal reaction at 180°C for 8 hrs.

In step S30, after completion of the hydrothermal reaction, the mixture was cooled to room temperature. The precipitate was separated, washed sequentially with deionized water and ethanol, and then dried in an oven at 80°C to obtain a vanadium-doped active material core.

### Preparation of heteroatom-doped carbon material

In step S40, 1 g of anhydrous glucose and 0.0515 g of boron oxide were placed into an agate mortar and thoroughly ground. The ground mixture was then transferred into a tube furnace, where it was subjected to calcination under an argon atmosphere. The temperature was raised from room temperature to 750°C at a heating rate of 2°C/min, held at 750°C for 6 hrs, and then cooled to room temperature to obtain a boron-doped carbon material.

### Preparation of battery cathode material

In step S50, 0.2 g of the boron-doped carbon material and 10 g of the vanadium-doped active material core were mixed, and ethanol was added. A resulting mixture was then subjected to ball-milling at a rotation speed of 480 rpm for 4 hrs. A resulting mixture after ball-milling was transferred to an oven and dried at 80°C for 6 hrs to remove the ethanol, obtaining a carbon-containing precursor.

In step S60, the carbon-containing precursor was placed in a tube furnace and subjected to stepwise sintering under a nitrogen atmosphere. The sintering process involved heating from room temperature to 180°C at a heating rate of 5°C/min and holding for 1 hr, followed by heating to 350°C at 2°C/min and holding for 2 hrs, and finally heating to 600°C at 2°C/min and holding for 4 hrs. After sintering, the material was allowed to cool naturally to room temperature, yielding the battery cathode material with the active material core having a chemical formula of LiMn_{0.6}Fe_{0.4}V_{0.03}PO₄.

### Example 7

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 55.6 g of ferrous sulfate heptahydrate and 0.5769 g of ammonium metavanadate were added to the Li₃PO₄ suspension. After stirring for 0.5 hrs, a resulting mixture was transferred into a hydrothermal reaction autoclave, where it underwent a hydrothermal reaction at 180°C for 8 hrs.

In step S30, after completion of the hydrothermal reaction, the mixture was cooled to room temperature. The precipitate was separated, washed sequentially with deionized water and ethanol, and then dried in an oven at 80°C to obtain a vanadium-doped active material core.

### Preparation of heteroatom-doped carbon material

In step S40, 1 g of anhydrous glucose and 0.0515 g of boron oxide were placed into an agate mortar and thoroughly ground. The ground mixture was then transferred into a tube furnace, where it was sintered under an argon atmosphere. The temperature was raised from room temperature to 750°C at a heating rate of 2°C/min, held at 750°C for 6 hrs, and then cooled to room temperature to obtain a boron-doped carbon material.

### Preparation of battery cathode material

In step S50, 0.2 g of the boron-doped carbon material and 10 g of the vanadium-doped active material core were mixed, and ethanol was added. The resulting mixture was then subjected to ball-milling at a rotation speed of 480 rpm for 4 hrs. After ball-milling, the mixture was transferred to an oven and dried at 80°C for 6 hrs to remove the ethanol, obtaining a carbon-containing precursor.

In step S60, the carbon-containing precursor was placed in a tube furnace and sintered under a nitrogen atmosphere at 600°C for 7 hrs. After sintering, the material was allowed to cool naturally to room temperature, yielding the battery cathode material. Here, the chemical formula of the active material core is LiFeV_{0.03}PO₄.

### Example 8

The only difference between Example 8 and Example 1 was as follows: in step S60: the carbon-containing precursor was placed into a tube furnace and subjected to two-stage sintering under a nitrogen atmosphere. The temperature was raised to 300°C at a heating rate of 2°C/min and held for 2 hrs, then further raised to 600°C at 2°C/min and held for 8 hrs. After sintering, the material was allowed to cool naturally to room temperature to obtain the battery cathode material.

### Comparative Example 1

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 55.6 g of ferrous sulfate heptahydrate and 0.5769 g of ammonium metavanadate were added to the Li₃PO₄ suspension. After stirring for 0.5 hrs, a resulting mixture was transferred into a hydrothermal reaction autoclave, where it underwent a hydrothermal reaction at 160°C for 12 hrs.

In step S30, after completion of the hydrothermal reaction, the mixture was cooled to room temperature. The precipitate was separated, washed sequentially with deionized water and ethanol, and then dried in an oven at 80°C to obtain a vanadium-doped active material core.

### Preparation of battery cathode material

In step S40, 1 g of anhydrous glucose and 10 g of the vanadium-doped active material core were mixed, and ethanol was added. A resulting mixture was then subjected to ball-milling at a rotation speed of 300 rpm for 8 hrs. A resulting mixture after ball-milling was transferred to an oven and dried at 80°C for 6 hrs to remove the ethanol, obtaining a carbon-containing precursor.

In step S50, the carbon-containing precursor was placed in a tube furnace and subjected to stepwise sintering under a nitrogen atmosphere. The sintering process involved heating from room temperature to 100°C at a heating rate of 2 °C/min and holding for 1 hr, followed by heating to 300°C at 2°C/min and holding for 2 hrs, and finally heating to 600°C at 2°C/min and holding for 8 hrs. After sintering, the material was allowed to cool naturally to room temperature, yielding the battery cathode material with the active material core having a chemical formula of LiFeV_{0.03}PO₄.

### Comparative Example 2

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 55.6 g of ferrous sulfate heptahydrate was added to the Li₃PO₄ suspension. After stirring for 0.5 hrs, the mixture was transferred into a hydrothermal reaction autoclave, where it underwent a hydrothermal reaction at 160°C for 12 hrs.

In step S30, after completion of the hydrothermal reaction, the mixture was cooled to room temperature. The precipitate was separated, washed sequentially with deionized water and ethanol, and then dried in an oven at 80°C to obtain a cathode active material core.

### Preparation of heteroatom-doped carbon material

In step S40, 1 g of anhydrous glucose and 0.0515 g of boron oxide were placed into an agate mortar and thoroughly ground. The ground mixture was then transferred into a tube furnace, where it was subjected to calcination under an argon atmosphere. The temperature was raised from room temperature to 600°C at a heating rate of 2°C/min, held at 600°C for 10 hrs, and then cooled to room temperature to obtain a boron-doped carbon material.

### Preparation of battery cathode material

In step S50, 0.2 g of the boron-doped carbon material and 10 g of the cathode material core were mixed, and ethanol was added. The resulting mixture was then subjected to ball-milling at a rotation speed of 300 rpm for 8 hrs. The mixture after ball-milling was transferred to an oven and dried at 80°C for 6 hrs to remove the ethanol, obtaining a carbon-containing precursor.

In step S60, the carbon-containing precursor was placed in a tube furnace and subjected to stepwise sintering under a nitrogen atmosphere. The sintering process involved heating from room temperature to 100°C at a heating rate of 2°C /min and holding for 1 hr, followed by heating to 300°C at 2°C/min and holding for 2 hrs, and finally heating to 600°C at 2°C/min and holding for 8 hrs. After sintering, the material was allowed to cool naturally to room temperature, yielding the battery cathode material with the cathode material core having a chemical formula of LiFePO₄.

### Comparative Example 3

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 55.6 g of ferrous sulfate heptahydrate and 0.5769 g of ammonium metavanadate were added to the Li₃PO₄ suspension. After stirring for 0.5 hrs, a resulting mixture was transferred into a hydrothermal reaction autoclave, where it underwent a hydrothermal reaction at 160°C for 12 hrs.

In step S30, after completion of the hydrothermal reaction, the mixture was cooled to room temperature. The precipitate was separated, washed sequentially with deionized water and ethanol, and then dried in an oven at 80°C to obtain a vanadium-doped active material core.

### Preparation of heteroatom-doped carbon material

In step S40, 1 g of anhydrous glucose and 0.0772 g of boron oxide were placed into an agate mortar and thoroughly ground. The ground mixture was then transferred into a tube furnace, where it was subjected to calcination under an argon atmosphere. The temperature was raised from room temperature to 600°C at a heating rate of 2°C/min, held at 600°C for 10 hrs, and then cooled to room temperature to obtain a boron-doped carbon material.

### Preparation of battery cathode material

In step S40, 0.2 g of the boron-doped carbon material and 10 g of the vanadium-doped active material core were mixed, and ethanol was added. A resulting mixture was then subjected to ball-milling at a rotation speed of 300 rpm for 8 hrs. A resulting mixture after ball-milling was transferred to an oven and dried at 80°C for 6 hrs to remove the ethanol, obtaining a carbon-containing precursor.

In step S50, the carbon-containing precursor was placed in a tube furnace and subjected to stepwise sintering under a nitrogen atmosphere. The sintering process involved heating from room temperature to 160°C at a heating rate of 2°C/min and holding for 1 hr, followed by heating to 300°C at 2°C/min and holding for 2 hrs, and finally heating to 600°C at 2°C/min and holding for 8 hrs. After sintering, the material was allowed to cool naturally to room temperature, yielding the battery cathode material with the active material core having a chemical formula of LiFeV_{0.03}PO₄.

### Comparative Example 4

A battery cathode material was prepared by the following method:

### Preparation of active material core

In step S10, 25.176 g of lithium hydroxide monohydrate was dissolved in 150 mL of deionized water. Subsequently, 30 mL of ethylene glycol was added under magnetic stirring, followed by the dropwise addition of 23.05 g of phosphoric acid, resulting in a Li₃PO₄ suspension.

In step S20, 55.6 g of ferrous sulfate heptahydrate and 0.5769 g of ammonium metavanadate were added to the Li₃PO₄ suspension. After stirring for 0.5 hrs, a resulting mixture was transferred into a hydrothermal reaction autoclave, where it underwent a hydrothermal reaction at 160°C for 12 hrs.

In step S30, after completion of the hydrothermal reaction, the mixture was cooled to room temperature. The precipitate was separated, washed sequentially with deionized water and ethanol, and then dried in an oven at 80°C to obtain a vanadium-doped active material core.

### Preparation of battery cathode material

In step S50, 10 g of the vanadium-doped active material core was mixed, and ethanol was added. A resulting mixture was then subjected to ball-milling at a rotation speed of 300 rpm for 8 hrs. A resulting mixture after ball-milling was transferred to an oven and dried at 80°C for 6 hrs to remove the ethanol, obtaining a precursor.

In step S60, The precursor was placed in a tube furnace and subjected to stepwise sintering under a nitrogen atmosphere. The sintering process involved heating from room temperature to 100°C at a heating rate of 2°C/min and holding for 1 hr, followed by heating to 300°C at 2°C/min and holding for 2 hrs, and finally heating to 600°C at 2°C/min and holding for 8 hrs. After sintering, the material was allowed to cool naturally to room temperature, yielding the battery cathode material with the active material core having a chemical formula of LiFeV0.03PO4.

### Testing section

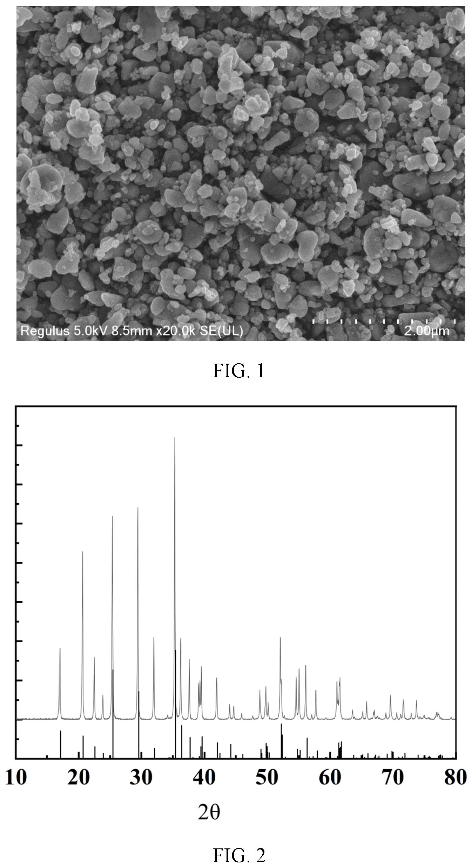

1. The battery cathode material was subjected to scanning electron microscopy (SEM), X-ray diffraction (XRD), and transmission electron microscopy (TEM) tests. The test results are shown in FIGS. 1-3.

FIG. 1 shows a SEM image of the battery cathode material prepared in this example. From FIG. 1, it can be seen that the cathode material has a high degree of dispersion and the particles are rounded with high sphericity.

FIG. 2 shows an X-ray diffraction pattern of the battery cathode material, indicating that the cathode material is free of impurities and has high crystallinity.

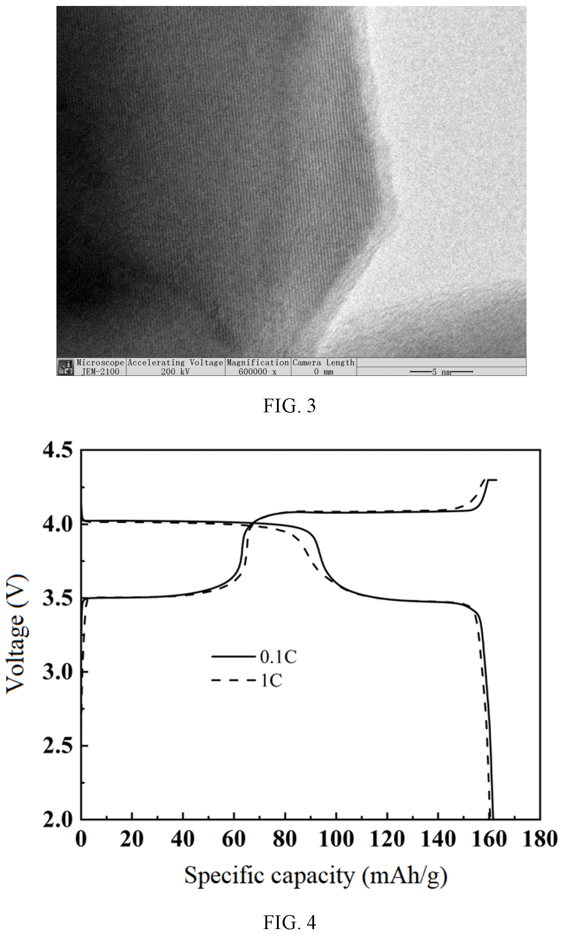

FIG. 3 shows a TEM image of the cathode material, revealing a regular and uniform coating layer.

### 2. Average particle size Dv50 of the battery cathode material

The battery cathode materials prepared in the examples and comparative examples were measured using a laser particle size analyzer according to GB/T 19077-2016. The test results are shown in Table 1.

### 3. Specific surface area of cathode material

5 g of the obtained cathode material powder was placed in a sample tube and degassed by heating. After degassing, the sample was weighed and placed on a testing instrument. At a constant low temperature (-296.7°C), the amount of gas adsorbed on the solid surface at different relative pressures was measured. Based on the Brunauer-Emmett-Teller (BET) multilayer adsorption theory and its formula, the monolayer adsorption amount of the sample was determined, and the specific surface area of the cathode material was calculated. The test results are shown in Table 1.

**Table 1**

| | Dv50 (µm) | Specific Surface Area (m²/g) | Thickness (nm) of coating layer |
|---|---|---|---|
| Example 1 | 1.37 | 10.84 | 3 |
| Example 2 | 1.35 | 11.66 | 3 |
| Example 3 | 1.20 | 12.31 | 3 |
| Example 4 | 0.55 | 17.66 | 4 |
| Example 5 | 0.65 | 16.50 | 4 |
| Example 6 | 0.70 | 15.20 | 4 |
| Example 7 | 1.29 | 11.50 | 3 |
| Example 8 | 1.23 | 11.56 | 3 |
| Comparative Example 1 | 1.40 | 10.02 | 3 |
| Comparative Example 2 | 1.55 | 12.54 | 3 |
| Comparative Example 3 | 1.38 | 11.36 | 3 |
| Comparative Example 4 | 1.66 | 9.63 | / |

### 4. Preparation of lithium-ion batteries

Preparation of Cathode plate: each of the cathode materials prepared in the above example and comparative example were used as the cathode active material. Conductive carbon black was used as the conductive agent, and polyvinylidene fluoride was used as the binder. The cathode active material, conductive agent, and polyvinylidene fluoride were mixed in a mass ratio of 93.74:2.33:4.2 and dissolved in an appropriate amount of N-methylpyrrolidone solvent. After grinding into a slurry, the slurry was coated onto aluminum foil, which was then dried at 120°C for 12 hrs to prepare the cathode plate.

Preparation of Coin Cell Batteries: Lithium foil was used as the anode, and a polypropylene microporous membrane was used as the separator. The electrolyte was 1 mol/L LiF₆PO₄, and the electrolyte solution was a mixture of ethylene carbonate, dimethyl carbonate, and ethyl methyl carbonate with a volume ratio of 1:1:1. CR2032 coin cell batteries were assembled in a glove box.

The prepared coin cell batteries were subjected to charge-discharge testing. The test voltage range was 2 V to 3.75 V, and the charging current was 0.1 C and 1 C. The charge-discharge test results are shown in Table 2 below.

**Table 2**

| | Initial Charge Specific Capacity (at 0.1 C) (mAh/g) | Discharge Specific Capacity (at 0.1 C) (mAh/g) | Initial Charge Specific Capacity (at 1C) (mAh/g) | Discharge Specific Capacity (at 1 C) (mAh/g) |
|---|---|---|---|---|
| Example 1 | 163 | 160.5 | 161.9 | 160.8 |
| Example 2 | 163.9 | 160.2 | 160.5 | 159.3 |
| Example 3 | 163.6 | 159.9 | 160.7 | 160.4 |
| Example 4 | 160.2 | 159.8 | 160.5 | 160.2 |
| Example 5 | 163.3 | 162.2 | 162.8 | 160.1 |
| Example 6 | 163.2 | 161.1 | 160.3 | 159.3 |
| Example 7 | 155.3 | 152.0 | 150.2 | 137.2 |
| Example 8 | 155.6 | 150.3 | 154.3 | 136.9 |
| Comparative Example 1 | 152.4 | 152.1 | 151.2 | 138.6 |
| Comparative Example 2 | 154.6 | 153.3 | 152.3 | 137.2 |
| Comparative Example 3 | 153.3 | 152.1 | 151.3 | 138.9 |
| Comparative Example 4 | 155.6 | 154 | 145 | 124.5 |

Based on the data in Table 2, it can be seen that using the heteroatom-doped carbon material as the carbon coating layer, combined with the metal-doped bulk phase cathode active material, can further improve the electrically conductive property of the battery cathode material. Comparing the charge-discharge data of the examples and comparative examples, it can be seen that the doped battery cathode material exhibits good charge-discharge capacity at both 0.1 C and 1 C rates. By adjusting the parameters and preparation process of the battery cathode material, the resulting cathode material, when used in a button cell battery, can achieve charge-discharge capacities of over 160 mAh/g at both 0.1 C and 1 C rates, demonstrating excellent performance.

Specifically, combining Example 1 and Comparative Example 1 and their experimental data, Example 1 involves doping the carbon material with heteroatoms, the corresponding button cell tests show a significant improvement in the initial charge-discharge specific capacity at both 0.1 C and 1 C. This is likely because the doping with heteroatoms effectively increased the concentration of hole carriers in the carbon material, thereby improving the electrically conductive property of the carbon layer, reducing the internal resistance of the battery, and ultimately enhancing the electrochemical performance of the battery.

Based on Example 1 and Comparative Example 2 and their experimental data, Example 1 involves doping the active material with metal elements, through metal cation doping, a phosphate material with cation defects is synthesized. During the substitution of original atoms by high-valence doping atoms, due to the charge balance of the compound, partial Li and Fe/Mn defects and a certain amount of coexisting Fe²⁺/Fe³⁺ states appear in the phosphate lattice. This facilitates the diffusion of Li ions and electrons in the solid phase, thereby improving the electrochemical performance of the crystal. When this cathode material is used in a secondary battery, a higher initial charge-discharge specific capacity is exhibited.

Compared to Example 1, Comparative Example 3 increases the doping amount of heteroatoms in the heteroatom-doped carbon material. The test results shows a significant decrease in the initial charge-discharge specific capacity. This indicates that when the heteroatom doping amount exceeds the range defined in the present application, excessive doping of heteroatoms easily leads to the formation of secondary phases. On the one hand, this reduces the proportion of active material, and on the other hand, because the formed secondary phase is a boron atom compound, a decrease in overall electrically conductive property is resulted, thus affecting the electrically conductive property of the carbon layer.

The sintering process of the cathode material precursor is further adjusted in Examples 7 and 8, compared with the experimental data from Example 1, it is found that the initial charge-discharge specific capacity of the battery in Examples 7-8 decreases to some extent. This may be because the volatile components and moisture in the cathode material are not completely removed. During the calcination process, these volatile components and moisture were accumulated inside the powder, leading to uneven heating and easy agglomeration of particles. The resulting particles contain a large number of grain boundaries, which hinders the diffusion of lithium ions and thus affects the electrochemical performance of the cathode material.

Although the present application has been described with reference to preferred embodiments, various modifications can be made thereto and components can be replaced with equivalents without departing from the scope of the present application. In particular, as long as there is no structural conflict, the technical features mentioned in the various embodiments can be combined in any way. The present application is not limited to the specific embodiments disclosed herein, but includes all technical solutions that fall within the scope of the claims.

## Claims

1. A battery cathode material, comprising: a phosphate-based active material core, and a coating layer covering the phosphate-based active material core, wherein the coating layer comprises a heteroatom-doped carbon material, a heteroatom comprises at least one element from Group IIIA elements, and a heteroatom content in the heteroatom-doped carbon material is 1 wt% to 5 wt%.

2. The battery cathode material according to claim 1, wherein
the heteroatom comprise one or more of B, Al, and Ga; and/or
a thickness of the coating layer is 2 nm to 5 nm; and/or
a mass ratio of a graphitized carbon to an amorphous carbon in the heteroatom-doped carbon material is (0.6 to 2) : 1.

3. The battery cathode material according to claim 1, wherein the phosphate-based active material core comprises an active material having a chemical formula LiₓM_{y}N_{z}PO₄, wherein M is at least one element selected from the group consisting of Fe, Mn, Co, and Ni; N is at least one element selected from the group consisting of V, Al, Ti, Ni, Nb, Mg, and Zr; 0.9 ≤ x ≤ 1.1; 0.9 ≤ y ≤ 1; and 0.001 ≤ z ≤ 0.08.

4. The battery cathode material according to claim 1, wherein
a carbon content of the battery cathode material is 0.5 wt% to 2 wt%; and/or
an average particle size Dv50 of the battery cathode material is 0.5 µm to 1.5 µm; and/or
a specific surface area of the battery cathode material is 8 m²/g to 30 m²/g.

5. A method for preparing a battery cathode material, comprising the following steps:
providing a phosphate-based active material and a heteroatom-doped carbon material;
mixing the heteroatom-doped carbon material and the phosphate-based active material and subjecting a resulting mixture to ball milling whereby obtaining a cathode material precursor; and
sintering the cathode material precursor under an inert atmosphere whereby obtaining the battery cathode material.

6. The method for preparing the battery cathode material according to claim 5, wherein the step of providing the heteroatom-doped carbon material comprises: providing a carbon source and a heteroatom source and subjecting the carbon source and the heteroatom source to calcination treatment, whereby obtaining the heteroatom-doped carbon material.

7. The method for preparing the battery cathode material according to claim 6, wherein,
the heteroatom source comprises one or more compounds containing Group IIIA elements; and/or
the carbon source comprises one or more of glucose, sucrose, and a starch; and/or
a mass percentage of the heteroatom source relative to the carbon source is 1% to 5%.

8. The method for preparing the battery cathode material according to claim 5, wherein the step of providing the phosphate-based active material comprises:
providing a lithium source, a phosphorus source, an M source, and an N source for reaction, and separating a solid after the reaction to obtain the phosphate-based active material.

9. The method for preparing the battery cathode material according to claim 8, wherein
the M source comprises one or more of a Fe source, a Mn source, a Co source, and a Ni source; and/or
the N source comprises one or more of a vanadium-containing compound, an aluminum-containing compound, a titanium-containing compound, a nickel-containing compound, a niobium-containing compound, a magnesium-containing compound, and a zirconium-containing compound; and/or
a molar ratio of the lithium source, the M source, the N source, and the phosphorus source satisfies Li : M : N : P = (0.9 to 1.1) : (0.9 to 1) : (0.001 to 0.08) : 1.

10. The method for preparing the battery cathode material according to claim 5, wherein a mass percentage of the heteroatom-doped carbon material relative to the phosphate-based active material is 0.5% to 2%.

11. The method for preparing the battery cathode material according to claim 5, wherein the step of sintering the cathode material precursor under the inert atmosphere comprises: reacting at a temperature of 100°C to 200°C for 0.5 hr to 1 hr, increasing the temperature to 300°C to 400°C and reacting for 1 hr to 2 hrs, and further increasing the temperature to 600°C to 800°C and reacting for 4 hrs to 8 hrs, wherein a heating rate in each stage is 2°C/min to 5°C/min.

12. A cathode plate, comprising the battery cathode material according to any one of claims 1-4 or the battery cathode material prepared by the method for preparing the battery cathode material according to any one of claims 5-11.

13. A lithium-ion battery, comprising the cathode according to claim 12.
